Europäisches Patentamt

European Patent Office

Office européen des brevets

(11) Publication number: 0 276 083 B1

# EUROPEAN PATENT SPECIFICATION

(45) Date of publication of patent specification: **13.05.92**  (51) Int. Cl.⁵: **B28B  3/26**

(21) Application number: **88300265.1**

(22) Date of filing: **13.01.88**

(54) Extrusion die.

(30) Priority: **19.01.87 JP 8333/87**

(43) Date of publication of application:
**27.07.88 Bulletin  88/30**

(45) Publication of the grant of the patent:
**13.05.92 Bulletin  92/20**

(84) Designated Contracting States:
**BE DE FR GB IT**

(56) References cited:
**EP-A- 0 017 686
EP-A- 0 017 687
EP-A- 0 149 318
DE-A- 3 431 892**

(73) Proprietor: **NGK INSULATORS, LTD.
2-56, Suda-cho, Mizuho-ku
Nagoya City Aichi Pref.(JP)**

(72) Inventor: **Maekawa, Hideya
14-1 Nishimoyama Nawa-Cho
Tokai City Aichi Pref.(JP)**
Inventor: **Ito, Haremi
19, Shinmei-Cho 2-Chome
Tokoname City Aichi Pref.(JP)**
Inventor: **Tanaka, Kenichi
48-2, Aza-Ohyashiki Taketoyo-Cho
Chita-Gun Aichi Pref.(JP)**

(74) Representative: **Senior, Alan Murray et al
J.A. KEMP & CO 14 South Square Gray's Inn
London WC1R 5EU(GB)**

Rank Xerox (UK) Business Services
(3.08/2.19/2.0)

## Description

The present invention relates to a die for extruding a batch of ceramic raw material for a ceramic honeycomb structural body, particularly to such die that can easily be produced to have a desired slit width in a short period of time.

Heretofore, when adjusting the width of lattice-like slits of a die for extruding a batch of ceramic raw material for a ceramic honeycomb structural body, the width of the lattice-like slits is adjusted to a desired slit width by providing a plating layer of a metal etc., on the surfaces of the slits. That is, the slit width is adjusted by preparing the matrix of the die to have a larger slit width than the desired slit width, and applying a plating layer of a metal such as nickel, etc., on the slits surface of the matrix by electroless plating, as described in Japanese Patent Application Publication No. 39,167/86 which corresponds to European Patent No. 17,686 B.

The thus obtained die having the desired slit width is used for extruding the ceramic batch to form the ceramic honeycomb structural body. When the die is worn at the electroless plating layer by the abrasion of the extruded ceramic batches, the worn die is reclaimed or renewed by removing the worn plating metal layer from the slits surface of the matrix, and applying another plating metal layer on the slits surface of the matrix to a desired slits width, for further use in extruding ceramic batches.

The life of dies can be prolonged by improvements in the abrasive-resistant property of the plated layer on the slits, and the abrasive-resistant property of the plated layer can be improved to some extent by varying the type of reducing agent and subjecting the plated layer to a heat treatment. However, such improvements have been naturally limited, because the plating layer is composed mainly of nickel.

A method of improving the abrasive-resistant property of an electroless plated metal layer is disclosed in Japanese Patent Application Publication No. 24,857/72 corresponding to U.S. Patent No. 3,617,363, wherein a composite plating layer composed of a plating layer and abrasive-resistant particles dispersed in the plating layer is applied on the surface of an article to be plated from an electroless plating solution containing dispersed abrasive-resistant particles.

However, when the above method is applied to dies for providing the composite plating layer, the following drawbacks are encountered, though the demand of high abrasive-resistant property can be satisfied.

Firstly, the reclaiming of such a composite plating layer was heretofore impossible in the technical field of the die, because of its poor solubility in a removing solution.

Secondly, if the plating layer on the slits of the die is constituted solely from a composite plating layer composed of a metal substrate and abrasive-resistant particles of such as silicon carbide, tungsten carbide or the like dispersed in the metal substrate, the plating layer has to be removed totally and the electroless composite plating has to be started from the beginning, when the plating layer of the die is reclaimed after the plating layer is worn by the abrasion of the ceramic batches. In this case, there are drawbacks in that the abrasive-resistant particles adhere firmly on the surface of the slits so that a means has to found for removing the adhered particles by highly pressurized water, while forcible removal of the particles leaves scars on the slits and/or the metal matrix of the die.

Thirdly, the electroless composite plating has a drawback of low deposition rate and requires a deposition time of about 2-3 times of electroless plating of a single metal, and a drawback of further necessitating a long deposition time when the slits surfaces are ground due to the repetition of reclaim of the slits and an increased amount of electroless plating has to be effected on the ground surface of the slits.

Fourthly, if the electroless composite abrasive-resistant plating layer is directly deposited on the slit surfaces of the die, the amount of the electroless composite abrasive-resistant plating layer deposited on the corner portions of the matrix in the cross-section of the slits is smaller than that deposited on the other portions of the matrix, and therefore the surface of the deposited plating layer assumes a rough surface. Thus, a drawback occurs in that a uniform slit width is difficult to obtain. This is presumably due to the reason that the composite abrasive-resistant plating layer has a poor uniform deposition property as compared to the usual electroless plating layer, because the layer contains the abrasive-resistant particles uniformly distributed therein and the plating layer is easily influenced by the influence of the underlying matrix surface.

An object of the present invention is to obviate the above drawbacks.

Another object of the present invention is to provide a novel die which can produce ceramic honeycomb structural bodies and which has a structure that can easily from the highly abrasive-resistant slits of a desired slits width simply in a short period of time.

The present invention provides a die for extruding a batch of ceramic raw material to make a ceramic honeycomb structural body, which die has lattice-like slits of a desired width for defining the thickness of cell walls of the honeycomb structural body the die comprising a matrix having slits, and a composite plating film of a double layered structure on at least the surfaces of the slits of the matrix for defining the width of the slits of the die to the desired width, characterised in that the plating film comprises an abrasive-resistant layer plated on an electroless plated layer arranged on the surfaces of the slits of the matrix.

The invention also provides a corresponding method of making a die.

With the present invention, an electroless plating metal layer, which has a high deposition rate, is applied at least on the surface of the slits of the matrix, and a composite abrasive-resistant plating layer made of a substrate of metal such as Ni etc., and abrasive-resistant particles such as silicon carbide, tungsten carbide, boron carbide and the like dispersed in the metal substrate, is applied on the electroless plating material layer, to form a composite plating film of a double layered structure for adjusting the slit width to a desired slit width. Therefore, the die can be produced to a desired slit width in a shorter time than that required for producing the die of the desired slit width using the composite abrasive-resistant plating layer only as a plating layer for the slits. Because the surface facing the ceramic batch is the composite abrasive-resistant plating layer, the die of the present invention can achieve a highly abrasive-resistant property and a prolonged life as well.

Furthermore, because the electroless plating layer at the base of the composite plating layer has a good uniform deposition property, it forms a smooth deposition layer on the rough surface of the matrix even at the corners of the slits, which is similarly uniform to the layers formed on the other portions of the matrix. Therefore, the composite abrasive-resistant plating layer can be deposited on the smooth and uniform surface of the electroless plating layer. Thus, the resultant composite plating layer assumes a smooth and uniform deposition layer as a whole, so that a die having slits of a smooth and uniform slit width throughout the slits can be obtained.

Preferably, the electroless plating metal layer is made of nickel, and the composite abrasive-resistant plating metal layer is made of a nickel substrate and abrasive-resistant particles of tungsten carbide, silicon carbide or boron carbide dispersed in the nickel substrate, because such arrangement provides a good adhesion between the layers and the matrix, and a superior abrasive-resistant property by the use of the silicon carbide, tungsten carbide or boron carbide particles.

Preferably, the thickness of the composite abrasive-resistant plating layer is selected such that it corresponds to the wear thereof by the abrasion of the ceramic batch before the reclaiming operation, so that the composite plating film of the double layered structure can be produced in the shortest time, and can retain the composite abrasive-resistant plating layer always on the surface thereof.

For a better understanding of the invention, reference is made to the accompanying drawings, in which:

Fig. 1 is a vertical sectional view of an extrusion die of the present invention having a mask plate in front of the orifice portion of the die; and

Fig. 2 is an enlarged vertical sectional view of the orifice portion of a matrix of an extrusion die of the present invention.

Throughout different views of the drawings, numberings of referential numerals indicate the following.

1 ... extrusion die
2 ... matrix of the die
3 ... orifice portion or front side of the die
5 ... slit of the die 1
7 ... inlet hole for introducing a ceramic batch
8 ... composite plating film or layer
9 ... electroless plating layer
10 ... composite abrasive-resistant plating layer
11 ... mask plate
t ... width of slit 5

Hereinafter, the present invention will be explained in more detail with reference to the accompanying drawings.

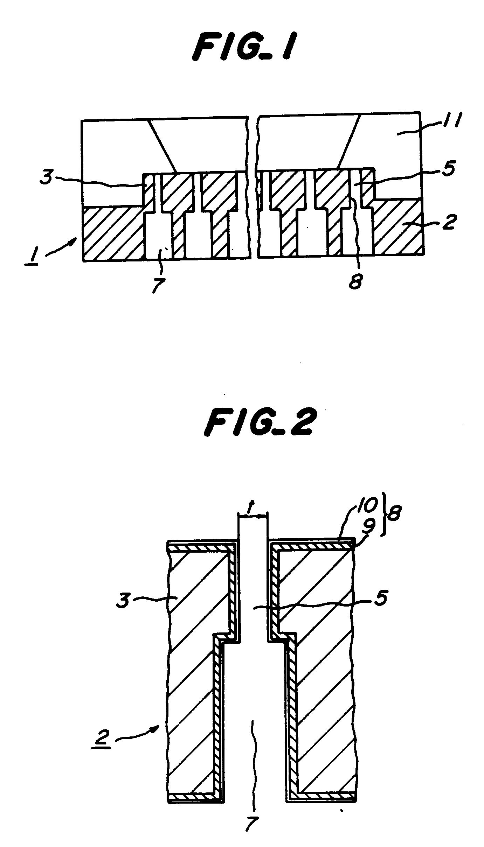

Referring to fig. 1, an embodiment of the extrusion die of the present invention is shown, wherein lattice-like slits 5 are formed uniformly in the front side or the orifice portion 3 of the matrix 2 of the extrusion die 1 by a conventional treatment of machining or electric discharge treatment, and a plurality of inlet holes 7 corresponding to the slits 5 and in alignment of their axes are bored from the rear side or the interior of the matrix 2 so as to communicate with the slits 5. A mask plate 11 is arranged in front of the orifice portion 3 of the die 1.

When extruding the ceramic batch from the die 1, the ceramic batch is introduced into the inlet holes 7 from a feed source not shown and extruded through the slits 5 to the exterior to form a green honeycomb structural body. The cells of the honeycomb body are formed when the ceramic batch is passed through the slits 5, and the outer wall of the honeycomb body is defined when the ceramic batch is passed through the mask plate 11. Hence, in the present invention, the thickness of the wall defining the cells of the honeycomb structural body is determined or adjusted by the width of the slits 5 having the applied composite plating layer 8, and the width of the slits 5 is adjusted by the thickness of the composite plating layer 8 of the double layered structure composed of the electroless plating layer 9 and the composite abrasive-resistant plating layer 10 to be applied on the slits 5.

Referring to Fig. 2, the structure of the composite plating layer 8 will be explained in more detail. The surface of the slits 5 is plated by the electroless plating layer 9 and the surface of the plating layer 9 is plated by the composite abrasive-resistant plating layer 10, thereby forming the composite plating layer 8 of the double layered structure composed of the plating layers 9 and 10 on the slits surface. The thickness of the composite plating layer 8 adjusts or determines the width t of the slits 5. Thus, when the thickness of the composite plating layer 8 is thicker, the width t of the slits 5 is smaller.

As a material of the electroless plating layer 9, use is made of any metal that can be used for electroless plating, and preferably nickel etc., is used because of their good adhering property to the matrix 2 of the die 1.

As a material of the matrix 2 of the die 1, use is made of a structural carbon steel and the like having a large mechanical strength.

The composite abrasive-resistant plating layer 10 is constituted from a substrate of a metal that can be formed by electroless plating and abrasive-resistant particles dispersed in the metal substrate so that it can exhibit a superior abrasive-resistant property.

As a material of the metal substrate of the abrasive-resistant plating layer 10, use is made of any metal that can be used for electroless plating. Preferably, the material of the metal substrate is the same material as that used for the electroless plating layer 9, because it exhibits a good adhering property to the electroless plating layer 9.

As the abrasive-resistant particles of the plating layer 10, use is made of highly abrasive-resistant metals and/or ceramics, such as silicon carbide, tungsten carbide or boron carbide.

As a reducing agent to be used in the electroless plating steps for depositing the composite plating layer 8 of the double layered structure, use is made of hypophosphite or sodium borohydride.

In the present invention, the composite plating layer 8 is desirably hard, so that hypophosphite which causes to contain phosphorous in the composite plating layer 8 is preferably used as the reducing agent.

For forming the composite plating layer 8 of the double layered structure, an electroless plating of a metal generally of a fast deposition rate is effected at least on the surface of the slits 5 at a deposition rate of 13 $\mu$m/hr to form an electroless plating layer 9, at first. Then, a composite abrasive-resistant plating of a metal and abrasive-resistant particles of a slow deposition rate is effected on the thus obtained electroless plating layer 9 at a slow deposition rate of 4-7 $\mu$m/hr to form a composite abrasive-resistant layer 10. Thus, the composite plating layer 8 can be formed in a very short period of time as compared with the case of forming the plating layer 8 by solely from the same abrasive-resistant layer 9. In an embodiment of the present die having a slit width t of about 0.20 mm, the composite plating layer 8 should have a thickness of about 40 $\mu$m. In case when the reclaiming of the die 1 is scheduled to effect at the time when the composite plating layer 8 is worn by 15 $\mu$m, the electroless plating is preferably be effected to form an electroless plating layer 9 of a thickness of 25 $\mu$m on the surface of the slits 5, and the composite abrasive-resistant plating layer 10 of a thickness of 15 $\mu$m is preferably formed on the electroless plating layer 9, so that the composite abrasive-resistant plating layer 10 remains always on the surface of the slits 5 of the die 1.

In the above embodiment, the composite plating layer 8 is shown to cover the whole surface of the slits 5, however, the composite plating layer 8 may be portionally omitted or may be provided on the whole surface of the matrix 2, so far as the plating layer 8 is provided with the determined width t at the outlet end of the slits 5.

The thus produced die, and a die produced by depositing solely an electroless plating nickel layer of a thickness of 0.040 mm on the matrix of the die and adjusting 0.20 mm in slit-width, are used in extruding the ceramic honeycomb structural bodies for comparison. After the extrusion of the honeycomb structural bodies of a length of 1500 m, the extent of the wear of the slits of the dies are respectively measured. The wear of the former die produced by the present method is only 0.010 mm, while the wear of the latter die has a value of 0.021 mm, which is twice as large.

As apparent from the foregoing explanations, the extrusion die of the present invention has the composite plating layer composed of the electroless plating layer and the composite abrasive-resistant plating layer for defining the width of the slits of the matrix, so that the width of the slits can easily and simply be adjusted in a short period of time, and the reclaiming operation can be effected easily and simply without adhesion of the abrasive-resistant particles on the slits surface and the matrix surface, when the reclaiming operation of the die worn at the slits is effected.

Although the present invention has been described with reference to specific embodiment and specific values, it is of course apparent to those skilled in the art that various modifications and variations are possible without departing the broad spirits and aspects of the present invention as defined in the appended claims.

## Claims

1. A die (1) for extruding a batch of ceramic raw material to make a ceramic honeycomb structural body, which die has lattice-like slits (5) of a desired width (t) for defining the thickness of cell walls of the honeycomb structural body, the die comprising a matrix having slits (5); and a composite plating film (8) of a double layered structure on at least the surfaces of the slits of the matrix for defining the width of the slits of the die to the desired width, characterised in that the plating film comprises an abrasive-resistant layer (10) plated on an electroless plated layer (9) arranged on the surfaces of the slits of the matrix.

2. A die as defined in claim 1, wherein the electroless plated layer (9) is nickel.

3. A die according to claim 1 or 2 wherein the abrasive-resistant plated layer (10) is of a metal, preferably nickel, with abrasive-resistant particles dispersed therein.

4. A die according to claim 3, wherein the particles are of silicon carbide, tungsten carbide or boron carbide.

5. A die as defined in any preceding claim wherein the abrasive-resistant plating layer (10) has a thickness which corresponds to the wear thereof by the abrasion of the ceramic batch before the reclaiming operation.

6. A method for making a die according to any one of the preceding claims, which die (1) has lattice-like slits (5) of a desired width for defining the thickness of cell walls of a honeycomb structural body, the method comprising the steps of:
   providing a matrix (2) having slits (5); and electroless plating a layer (9) on at least the surfaces of the slits of the matrix; characterised in that it comprises the further steps of
   plating an abrasive resistant layer (10) onto said plated layer for defining the width of the slits of the die to the desired width.

7. A method according to claim 6, wherein the step of electroless plating comprises plating a nickel layer.

8. A method according to claim 6 or 7, wherein the step of plating an abrasive-resistant layer comprises plating a metal, preferably nickel, layer and dispersing abrasive-resistant particles therein.

9. A method according to claim 8, wherein the step of dispersing particles comprises dispersing particles of silicon carbide, tungsten carbide or boron carbide.

## Revendications

1. Moule (1) pour extruder une masse de matière première céramique pour fabriquer un corps céramique de structure alvéolée, le moule ayant des fentes (5) en forme de treillis d'une largeur désirée (t) pour définir l'épaisseur des parois cellulaires du corps de structure alvéolée, le moule comprenant une matrice ayant des fentes (5); et un film composite (8) de placage, de structure à double couche, déposé au moins sur les surfaces des fentes de la matrice pour définir la largeur des fentes du moule à la largeur désirée, caractérisé en ce que le film de placage comprend une couche (10) résistant à l'abrasion, plaquée sur une couche (9) déposée par électrolyse et disposée sur les surfaces des fentes du moule.

2. Moule tel que défini dans la revendication 1, dans lequel la couche (9) déposée par électrolyse est en nickel.

3. Moule selon les revendications 1 ou 2, dans lequel la couche (10) de placage résistant à l'abrasion est en métal, de préférence en nickel avec des particules résistant à l'abrasion dispersées à l'intérieur.

4. Moule selon la revendications 3, dans lequel les particules sont en carbure de silicium, carbure de tungstène ou carbure de bore.

5. Moule tel que défini par l'une quelconque des revendications précédentes, dans lequel la couche (10) de placage résistant à l'abrasion a une épaisseur qui correspond à son usure par l'abrasion de la masse céramique avant l'opération de récupération.

6. Procédé pour fabriquer un moule selon l'une quelconque des revendications précédentes, le moule (1) ayant des fentes (5) en forme de treillis d'une largeur désirée pour définir l'épaisseur des parois cellulaires d'un corps de structure alvéolée, le procédé comprenant les étapes suivantes:

- fournir une matrice (2) ayant des fentes (5), et
- plaquer par électrolyse une couche (9) sur au moins les surfaces des fentes de la matrice; caractérisé en ce qu'il comprend les étapes ultérieures de:
- plaquer une couche (10) résistant à l'abrasion sur ladite couche plaquée pour définir la largeur des fentes du moule à la largeur désirée.

7. Procédé selon la revendication 6, dans lequel l'étape de placage par électrolyse comprend le placage d'une couche de nickel.

8. Procédé selon les revendications 6 ou 7, dans lequel l'étape de placage d'une couche résistant à l'abrasion comprend le placage d'une couche de métal, de préférence du nickel, et la dispersion de particules résistant à l'abrasion à l'intérieur.

9. Procédé selon la revendication 8, dans lequel l'étape de la dispersion de particules comprend la dispersion de particules de carbure de silicium, carbure de tungstène ou carbure de bore.

**Patentansprüche**

1. Giessform (1) zum Extrudieren einer Charge keramischen Rohmaterials zur Herstellung eines Keramikkörpers mit Honigwabenstruktur, wobei die Giessform gitterförmige Schlitze (5) mit einer gewünschten Breite (t) zur Festlegung der Dicke der Zellenwände des Honigwabenkörpers besitzt, die Giessform eine Matrix mit Schlitzen (5) aufweist und ein zusammengesetzter zweischichtiger Plattierfilm mindestens auf den Oberflächen der Schlitze der Matrix zur Festlegung der Breite der Schlitze der Giessform entsprechend der gewünschten Breite vorgesehen ist, **dadurch gekennzeichnet,** daß der Plattierfilm aus einer abriebfesten Schicht (10) und einer stromlos plattierten Schicht zusammengesetzt ist, wobei die abriebfeste Schicht auf die auf der Oberfläche der Schlitze der Matrix angeordnete stromlos plattierte Schicht (9) aufplattiert ist.

2. Giessform nach Anspruch 1, **dadurch gekennzeichnet,** daß die stromlos plattierte Schicht (9) aus Nickel besteht.

3. Giessform nach Anspruch 1 oder 2, **dadurch gekennzeichnet,** daß die abriebfeste plattierte Schicht (10) aus eine Metall, vorzugsweise aus Nickel, besteht, in welchem abriebfeste Partikel dispergiert sind.

4. Giessform nach Anspruch 3, **dadurch gekennzeichnet,** daß die Partikel aus Siliziumkarbit, Wolframkarbit oder Borkarbit bestehen.

5. Giessform nach einem der vorhergehenden Ansprüche, **dadurch gekennzeichnet,** daß die abriebfeste Plattierschicht (10) eine Dicke aufweist, die ihrem Abrieb durch die Keramikmaterial-Charge vor dem regenerierenden Betrieb entspricht.

6. Verfahren zur Herstellung einer Giessform nach einem der vorhergehenden Ansprüche zum Extrudieren einer Charge keramischen Materials zur Herstellung eines strukturierten Keramikkörpers, wobei die Giessform (1) gitterförmige Schlitze (5) einer gewünschten Breite zur Festlegung der Dicke der Zellenwände des eine Honigwabenstruktur aufweisenden Keramikkörpers aufweist, eine Matrix (2) mit Schlitzen (5) hergestellt wird und mindestens auf den Oberflächen der Schlitze der Matrix stromlos eine Schicht (9) plattiert wird, **dadurch gekennzeichnet,** daß auf die plattierte Schicht (9) zur Einstellung der Breite der Schlitze der Giessform auf die gewünschte Breite eine abriebfeste Schicht (10) plattiert wird.

7. Verfahren nach Anspruch 6, **dadurch gekennzeichnet,** daß zur stromlosen Plattierung Nickel verwendet wird.

8. Verfahren nach Anspruch 6 oder 7, **dadurch gekennzeichnet,** daß zum Plattieren der abriebfesten Schicht ein Metall, vorzugsweise aus Nickel verwendet wird, in welchem abriebfeste Partikel dispergiert werden.

9. Verfahren nach Anspruch 8, **dadurch gekennzeichnet,** daß für die Partikel Siliziumkarbit, Wolframkarbit oder Borkarbit verwendet wird.

# FIG. 1

# FIG. 2